# EUROPEAN PATENT SPECIFICATION

(11) **EP 0 762 519 B1**
(45) Date of publication and mention of the grant of the patent: **27.10.1999**
(21) Application number: 96305791.4
(22) Date of filing: 07.08.1996
(51) Int. Cl.: H01M 2/02

(54) **Manufacturing method of battery can**
Batteriegehäuse Herstellungsverfahren
Méthode de fabrication d'un boîtier de pile

(30) Priority: 07.08.1995 JP 20061295
(43) Date of publication of application: 12.03.1997
(73) Proprietor: MATSUSHITA ELECTRIC INDUSTRIAL CO., LTD., Kadoma-shi, Osaka 571-0050 (JP)
(72) Inventor: Kitaoka, Susumu, Hirakata-shi, Osaka 573 (JP); Iwase, Akira, Hirakata-shi, Osaka 573-01 (JP); Nakayama, Ryoichi, Osaka-shi, Osaka 530 (JP)
(74) Representative: Crawford, Andrew Birkby

(56) References cited:
- EP-A- 0 629 009
- PATENT ABSTRACTS OF JAPAN vol. 008, no. 025 (E-225), 2 February 1984 & JP-A-58 188050 (MATSUSHITA DENKI SANGYO KK), 2 November 1983,
- PATENT ABSTRACTS OF JAPAN vol. 017, no. 424 (E-1410), 6 August 1993 & JP-A-05 089861 (MATSUSHITA ELECTRIC IND CO LTD), 9 April 1993,

## Description

### FIELD OF THE INVENTION

The present invention relates to a manufacturing method of battery can to be used as a case can for primary cell or secondary cell.

### BACKGROUND OF THE INVENTION

As the manufacturing method of battery can, hitherto, it is known to use annealed nickel plated steel plate as the material for battery can, manufacture a cup-shaped intermediate product in a deep drawing process from this battery can material, and extend the side peripheral part of the cup-shaped intermediate product in a subsequent squeezing process, thereby fabricating a battery can of a desired shape (see Japanese Laid-open Patent 5-89861). In the squeezing process of such conventional manufacturing method, however, vertical flaws (hair lines) in the squeezing direction are formed in the can side peripheral surface, and as the number of productions increases, the number of hair lines and depth and size of flaws increase, and it gives rise to necessity of replacement of the squeezing die, and the can manufacturing efficiency is extremely lowered, and usually the squeezing die was replaced after every manufacture of 10,000 to 20,000 cans.

EP-A-0629009 discloses a method of manufacturing a battery can from annealed nickel-plated steel plate in which the diameters of the grains in the nickel-plated layer are 1 to 5µm.

### SUMMARY OF THE INVENTION

The present invention provides a method of manufacturing a battery can comprising the steps of:
providing annealed nickel-plated steel plate, wherein the nickel plating comprises nickel particles;
manufacturing a cup-shaped intermediate product from said steel plate using a deep-drawing process; and
extending the side peripheral part of the cup-shaped intermediate product in a subsequent squeezing process to produce a battery can of a desired shape;
characterised in that said nickel particles contained in the nickel plating of said steel plate together have a means sectional area of 5.0µm² or less;
whereby to suppress the occurrence of hair lines in said squeezing process.

The invention presents a manufacturing method of battery can of excellent can manufacturing efficiency, not forming hair lines and not requiring such frequent replacement of the squeezing die in the squeezing process.

In one preferred embodiment the annealed nickel-plated steel plate is produced by annealing a nickel-plated steel plate for approximately 8 hours at approximately 600°C. In another preferred embodiment the annealing is conducted for approximately 8 hours at approximately 550°C.

A further preferred feature of the invention is that the mean particle size of the nickel particles prior to annealing should be less than 0.75µm.

The process till completion of the invention of this constitution is described below. The present inventor noticed that hair line was not formed in the squeezing process by using a nickel-plated steel plate before annealing as the battery can material when investigating the cause of occurrence of such hair lines. As a result of further investigation into the reason why hair line is not formed in the nickel-plated steel plate without annealing, it was found that there was an extreme change in the size of nickel particles in the nickel-plated layer before and after annealing.
That is, in the conventional nickel plated steel plate, for example, the sectional area of the nickel particles before annealing was 1.2 µm², and after ordinary annealing (600°C, 8 hours), they were grown to 14.5 µm².

Therefore, on the basis of such findings, the inventor supposed that the size of the nickel particle would affect the occurrence of hair line, and conducted various experiments, and concluded that occurrence of hair line could be prevented by defining the nickel particles below the sectional area of 5.0 µm².

Considering from the results, however, from the view point of prevention of occurrence of hair line only, the conventional nickel plated steel plate may be used without annealing, but without annealing, a nickel-iron alloy layer is not formed between the nickel layer and iron layer, and peeling may occur between the nickel layer and iron layer by bending process in deep drawing process, and pin holes may be formed in the battery can. Therefore, it is indeed impossible to employ the manufacturing method of using nickel plated steel plate without annealing.

Accordingly, the inventor improved the nickel plating method to prepare a nickel plated steel plate of extremely small nickel particle size from the beginning, or attempted to vary the annealing condition to suppress growth of nickel particles, or combined these two methods to control the nickel particles beneath the sectional area of 5.0 µm² even after annealing, and successfully prevented formation of hair line in the squeezing process.

### BRIEF DESCRIPTION OF THE DRAWINGS

Fig. 1 is a sectional view showing a cup-shaped intermediate product in an embodiment of the invention;
Fig. 2 is a schematic plan view of drawing and squeezing machine in the embodiment of the invention; and
Fig. 3 is a partially cut-away sectional view showing a battery can in the embodiment of the invention.

### DETAILED DESCRIPTION OF THE INVENTION

Referring now to the drawings, the invention is explained in an embodiment applied to a manufacturing method of battery can of LR6 alkaline-manganese battery.

As the material for battery can, an annealed nickel plated steel plate described below was used.

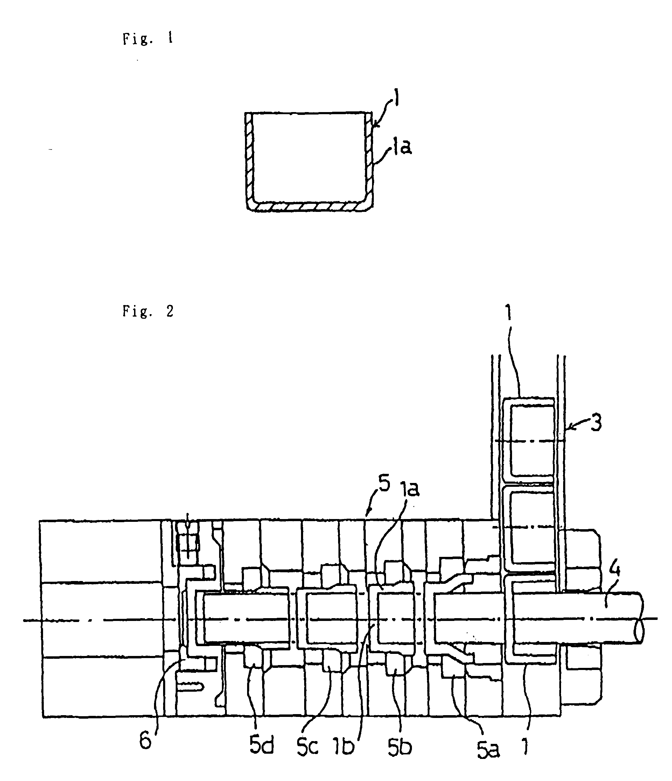

First, this battery can material was supplied as hoop material into a press, and the battery can material was blanked to a specified shape by the press in a known deep drawing process, and a cup-shaped intermediate product 1 as shown in Fig. 1 was obtained by deep drawing.

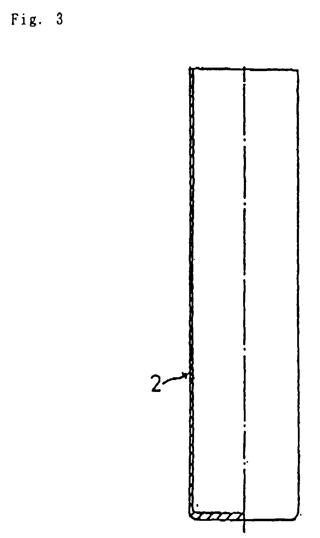

Then, using the drawing and squeezing machine shown in Fig. 2, one stage of drawing process and three stages of squeezing process were applied in one stroke in the cup-shaped intermediate product 1, and a battery can 2 as shown in Fig. 3 was manufactured.

The manufacturing process of the battery can 2 is described below. The drawing and squeezing machine comprises an intermediate product conveyor 3, a punch 4, a die mechanism 5, a stripper 6, and others.

The intermediate product conveyor 3 conveys cup-shaped intermediate products 1 sequentially to the molding position. The die mechanism 5 comprises a drawing die 5a, a first squeezing die 5b, a second squeezing die 5c, and third squeezing die 5d, and these dies 5a to 5d are arranged in series so as to be concentric with the axial center of the punch 4. The intermediate product 1 conveyed and positioned at the molding position is operated by the pushing motion of the punch 4 and drawn by the drawing die 5a so that its shape may be a shape conforming to the leading end shape of the punch 4. By this drawing process, the intermediate product 1 is deformed in a slightly smaller diameter and longer length, but is hardly changed in the wall thickness.

As the pushing motion of the punch 4 progresses, the intermediate product 1 is subjected to first stage of squeezing process by the first squeezing die 5b. By this first stage of squeezing process, the side peripheral part la of the intermediate product 1 is extended, and its wall thickness becomes smaller while the hardness is heightened. As the pushing motion of the punch 4 further advances, the intermediate product 1 is sequentially subjected to second stage and third stage of squeezing by the second squeezing die 5c of which inner diameter is smaller than that of the first squeezing die 5b and the third squeezing die 5d of which inner diameter is smaller than that of the second squeezing die 5c, and the side peripheral part la is sequentially extended, and the wall thickness becomes further smaller and the hardness becomes higher.

After squeezing process, the product is detached from the drawing and squeezing machine by the stripper 6, and the end portion is cut off, and the battery can 2 as shown in Fig. 3 is obtained.

The nickel plated steel plate as the battery can material is described below.

### (Embodiment 1)

The face and back surfaces of a steel plate of 0.40 mm in thickness were plated with nickel in a thickness of 2.4 µm each. In nickel plating, sodium naphthalene disulfonate was added as an organic additive (brightener), and the current density in the plating cell was heightened, and therefore the nickel plating layer was formed so that the nickel particles might be smaller. When the surface of the nickel plating layer was observed by electron microscope after ion etching, 64 nickel particles were observed in 30 µm. That is, the mean particle size of the nickel particles was 0.47 µm, and the mean sectional area was 0.22 µm².

This nickel plated steel plate was annealed for 8 hours at 600°C. As a result, the thickness of the pure nickel layer was 1.3 µm, and the thickness of the nickel and iron alloy layer was 2.8 µm. When the surface was observed by electron microscope after ion etching, 21 nickel particles were counted in 30 µm. That is, the mean particle size of the nickel particles was 1.43 µm, and the mean sectional area was 2.04 µm².

Using the nickel plated steel plate after annealing, the battery can was manufactured in the above manufacturing process, and occurrence of hair line was not observed in the squeezing process, and it was not necessary to replace the squeezing die after producing 500,000 pieces.

### (Embodiment 2)

The face and back surfaces of a steel plate of 0.40 mm in thickness were plated with nickel in a thickness of 3.5 µm each. In nickel plating, butyne-1,4-diol and coumarin and the like were added as organic additives (brightener), and a nickel plating layer was formed in small nickel particles by heightening the pH and lowering the plating temperature. When the surface of the nickel plating layer was observed by electron microscope after ion etching, 41 nickel particles were observed in 30 µm. That is, the mean particle size of the nickel particles was 0.73 µm, and the mean sectional area was 0.53 µm².

This nickel plated steel plate was annealed for 8 hours at 550°C. As a result, the thickness of the pure nickel layer was 2.1 µm, and the thickness of the nickel and iron alloy layer was 3.9 µm, When the surface was observed by electron microscope after ion etching, 16 nickel particles were counted in 30 µm. That is, the mean particle size of the nickel particles was 1.88 µm, and the mean sectional area was 3.53 µm².

Using the nickel plated steel plate after annealing, the battery can was manufactured in the above manufacturing process, and occurrence of hair line was not observed in the squeezing process, and it was not necessary to replace the squeezing die after producing 500,000 pieces.

### (Comparative Example)

The face and back surfaces of a steel plate of 0.40 mm in thickness were plated with nickel in a thickness of 2.3 µm each. In nickel plating, sodium naphthalene disulfonate was added as an organic additive (brightener), and the nickel plating layer was formed so that the nickel particles might be smaller than in the prior art. When the surface of the nickel plating layer was observed by electron microscope after ion etching, 40 nickel particles were observed in 30 µm. That is, the mean particle size of the nickel particles was 0.75 µm, and the mean sectional area was 0.56 µm².

This nickel plated steel plate was annealed for 8 hours at 600°C. As a result, the thickness of the pure nickel layer was 1.4 µm, and the thickness of the nickel and iron alloy layer was 2.9 µm, When the surface was observed by electron microscope after ion etching, 11 nickel particles were counted in 30 µm. That is, the mean particle size of the nickel particles was 2.72 µm, and the mean sectional area was 7.40 µm².

Using the nickel plated steel plate after annealing, the battery can was manufactured in the above manufacturing process, and as compared with the prior art, although the occurrence of hair line in the squeezing process was suppressed, but finally hair lines were observed, and the squeezing die was replaced after producing 30,000 pieces.

As known from these embodiments, by using the annealed nickel plated steel plate of which mean sectional area of nickel particles of the nickel plating layer on the surface is 5.0 µm² or less, occurrence of hair lines in the squeezing process can be suppressed, replacement of squeezing die is not necessary, and hence the can manufacturing efficiency can be enhanced.

## Claims

1. A method of manufacturing a battery can comprising the steps of:
providing annealed nickel-plated steel plate, wherein the nickel plating comprises nickel particles;
manufacturing a cup-shaped intermediate product from said steel plate using a deep-drawing process; and
extending the side peripheral part of the cup-shaped intermediate product in a subsequent squeezing process to produce a battery can of a desired shape;
characterised in that said nickel particles contained in the nickel plating of said steel plate together have a mean sectional area of 5.0µm² or less;
whereby to suppress the occurrence of hair lines in said squeezing process.

2. A method according to claim 1 in which said step of providing annealed nickel-plated steel plate comprises
providing steel plate having nickel plated on its surfaces and annealing said plate for 8 hours at 600°C to produce an annealed nickel-plated layer.

3. A method according to claim 1 in which said step of providing annealed nickel-plated steel plate comprises
providing steel plate having nickel plated on its surfaces and annealing said plate for 8 hours at 550°C to produce an annealed nickel-plated layer.

4. A method according to claim 1 in which said steps of providing annealed nickel plated steel plate comprise:
providing steel plate having nickel plated on its surfaces, said nickel having nickel particles with a mean particle size of less than 0.75µm, and annealing said plate.

## Patentansprüche

1. Ein Verfahren zur Herstellung eines Batteriegehäuses, das die Schritte umfaßt:
Bereitstellen eines geglühten nickelplattierten Stahlblechs, wobei die Nickelplattierung Nickelteilchen umfaßt;
Herstellen eines becherförmigen Zwischenerzeugnisses aus dem genannten Stahlblech, wobei ein Tiefziehverfahren verwendet wird; und
Dehnen des seitlichen Umfangsteils des becherförmigen Zwischenerzeugnisses in einem nachfolgenden Quetschverfahren, um ein Batteriegehäuse erwünschter Form zu erzeugen;
**dadurch gekennzeichnet**, daß die genannten Nickelteilchen, die in der Nickelplattierung des genannten Stahlblechs enthalten sind, zusammen eine mittlere Querschnittsfläche von 5,0 µm² oder weniger aufweisen;
wodurch das Auftreten von Haarrissen in dem genannten Quetschverfahren unterdrückt wird.

2. Ein Verfahren gemäß Anspruch 1, bei dem der Schritt, ein geglühtes nickelplattiertes Stahlblech bereitzustellen, umfaßt, ein Stahlblech bereitzustellen, das auf seinen Oberflächen nickelplattiert ist, und das genannte Blech während 8 Stunden bei 600°C zu glühen, um eine geglühte nickelplattierte Schicht zu erzeugen.

3. Ein Verfahren gemäß Anspruch 1, bei dem der Schritt, ein geglühtes nickelplattiertes Stahlblech bereitzustellen, umfaßt, ein Stahlblech bereitzustellen, das auf seinen Oberflächen nickelplattiert ist, und das genannte Blech während 8 Stunden bei 550°C zu glühen, um eine geglühte nickelplattierte Schicht zu erzeugen.

4. Ein Verfahren gemäß Anspruch 1, bei dem der genannte Schritt, geglühtes nikkelplattiertes Stahlblech bereitzustellen, umfaßt: ein Stahlblech bereitzustellen, das auf seinen Oberflächen nickelplattiert ist, wobei das genannte Nickel Nickelteilchen mit einer mittleren Teilchengröße von weniger als 0,75 um aufweist, und das Blech zu glühen.

## Revendications

1. Procédé de fabrication d'un boîtier de pile comprenant les étapes consistant :
à élaborer une plaque recuite d'acier nickelé, dans laquelle le plaquage de nickel comprend des particules de nickel ;
à fabriquer un produit intermédiaire en forme de coupe à partir de ladite plaque d'acier en utilisant un procédé d'emboutissage profond, et
à allonger la partie périphérique latérale du produit intermédiaire en forme de coupe par un procédé de compression ultérieur pour produire un boîtier de pile de forme souhaitée ;
caractérisé en ce que lesdites particules de nickel contenues dans le plaquage de nickel de ladite plaque d'acier ont conjointement une surface moyenne en coupe de 5,0 µm² ou moins,
de manière à supprimer l'apparition de fissures fines dans ledit procédé de compression.

2. Procédé selon la revendication 1, dans lequel ladite étape d'élaboration de la plaque recuite d'acier nickelé comprend
l'élaboration d'une plaque d'acier nickelée sur ses surfaces et le traitement de recuit de ladite plaque pendant 8 heures à 600°C pour produire une couche nickelée recuite.

3. Procédé selon la revendication 1, dans lequel ladite étape d'élaboration de la plaque recuite d'acier nickelé comprend
l'élaboration d'une plaque d'acier nickelée sur ses surfaces et le traitement de recuit de ladite plaque pendant 8 heures à 550°C pour produire une couche nickelée recuite.

4. Procédé selon la revendication 1, dans laquelle lesdites étapes d'élaboration de la plaque recuite d'acier nickelé comprennent
l'élaboration de ladite plaque d'acier nickelée sur ses surfaces, ledit nickel ayant des particules de nickel d'une taille particulaire moyenne inférieure à 0,75 µm et le traitement de recuit de ladite plaque.
